# EUROPEAN PATENT APPLICATION

(11) **EP 3 715 294 A1**
(43) Date of publication of application: **30.09.2020**
(21) Application number: 20165791.3
(22) Date of filing: 26.03.2020
(51) Int. Cl.: B65H 59/00, D01H 13/10, B65H 51/22

(54) **METHOD FOR CONTROLLING A WORKSTATION OF A TEXTILE MACHINE, A DEVICE FOR PERFORMING THE METHOD**

(30) Priority: 29.03.2019 CZ 201919819 U
(71) Applicant: MASCHINENFABRIK RIETER AG, 8406 Winterthur (CH)
(72) Inventor: Pilar, Evzen, 570 01 Litomysl (CZ)
(74) Representative: Musil, Dobroslav

(57) **Abstract**

The invention relates to a method for controlling means of a workstation of a textile machine producing yarn (1) comprising a compensating unit (9) of a yarn (1) loop with a compensating member (6, 8) and, optionally, with a rotary drum (7), in which at least one quantity of the current state of the compensating member (6, 8) and/or of the optional rotary drum (7) is sensed, whereupon from the sensed quantity is generated a state value which characterizes the current state of the compensating member (6, 8) and/or of the optional rotary drum (7), whereupon the state value is introduced to the control unit of at least one other work node of the workstation and/or of the textile machine to control this other work node of the workstation and/or to control the textile machine.

In addition, the invention also relates to a device for performing this method and also to a sensor of the state of a workstation of a textile machine.

## Description

### Technical field

The present invention relates to a method for controlling working means of a workstation of a textile machine, especially of a yarn manufacturing textile machine, comprising a compensating unit with a compensating arm for compensating for a yarn loop, optionally with a rotary drum for accumulating yarn, whereby information from internal and external detection means of the compensating unit is used for the control activity of a control unit comprising a controller.

The invention also relates to a device for performing the method for controlling means of a workstation of a textile machine, especially a yarn manufacturing textile machine, comprising a compensating unit for compensating for a yarn loop with a compensating arm, optionally with a rotary drum for accumulating yarn, whereby the workstation comprises a control unit coupled to a bidirectional communication channel with internal or external means of detecting the current state of the compensating unit and the work nodes at the workstation of the textile machine. The control unit is provided with a decision-making and driving controller of the work nodes of the workstation according to the state of the compensating unit.

In addition, the invention also relates to a sensor of the state of a textile machine, especially of a yarn manufacturing textile machine.

### Background art

During the winding of yarn on a cross-wound conical bobbin on a textile machine at a constant speed of the yarn being produced, for example on a rotor spinning machine or an air-jet spinning machine, the yarn is periodically slackened due to the traversing of the yarn over the width of the bobbin, especially conical. As a result, due to the constant speed of the yarn withdrawal from a spinning unit, it is necessary to compensate for this slackening by lengthening and shortening the length of the yarn travel path between a draw-off mechanism and a yarn winding device. For this purpose, various compensators which are arranged in the yarn path between the yarn spinning unit and the yarn winding device are used. Such compensators comprise a swing compensating arm which by one of its ends acts upon the yarn, lengthening or shortening the yarn path at the workstation in the relevant section between the yarn draw-off mechanism and the yarn winding device as required. Also, the compensating arm maintains a stable tension in the yarn, which is essential for the correct winding of yarn on the bobbin.

Various drum intermediate storage devices of yarn are also known to compensate for the yarn length at the workstation of the textile machine, which comprise a rotary drum with a drive and an outer shell for accumulating yarn, whereby the drum intermediate storage device further comprises a rotary guiding arm of yarn coupled to the drum by a suitably adjusted coupling of the type master-slave, i.e. that the arm can at all times only move in the same direction as the drum and, as a rule, always at a slower rate, at the most it can move at the same speed as the drum. The yarn is withdrawn from the spinning unit by draw-off rollers and first it is wound onto the rotary drum of the drum intermediate storage device, thereby forming a yarn reserve, from which the yarn is subsequently withdrawn through a hooking element of the rotary guiding arm and into a traversing device and is wound onto a bobbin. The hooking element of the rotary guiding arm hooks the yarn, guides it onto the rotary drum, over which the yarn is further wound between the point of yarn feed and the point of yarn withdrawal, thereby eliminating free yarn by lengthening the yarn path by wrapping the yarn around the rotary drum.

CZ PV 2014-399 discloses a device for eliminating a yarn loop by a compensator during winding onto a cross-wound bobbin on a spinning machine with a constant speed of yarn being produced, which comprises a movable compensating arm with a yarn hooking and guiding means, whose path intersects the yarn path between a yarn draw-off mechanism and a yarn winding device, whereby the compensating arm is fixedly mounted on an output element of a reversible bidirectionally controlled means, which is connected to a control device for controlling the position and/or direction and/or speed and/or force action of the output element of the reversible bidirectionally controlled means. In one embodiment, the reversible bi-directionally controlled means comprises a cylindrical bipolar magnet on which the compensating arm is mounted and which is rotatably mounted about its longitudinal axis in a magnetic coil circuit connected to a coil power source as directed by the control device. Alternatively, the reversible bidirectionally controlled means consists of a suitable electric motor, typically a BLDC. The BLDC motor control is based on the knowledge of the current position of the compensating arm, since the BLDC motors already have a built-in encoder for the rotation of their output shaft. The control of the electromagnetic device with a cylindrical magnet is here based on the data of at least one sensor of the compensating arm position.

CZ PV 2012-479 discloses a device for maintaining a constant tension in yarn being wound by means of a drum intermediate storage device of yarn arranged at a workstation of a textile machine, which comprises a spinning unit for producing yarn and a winding device for winding the produced yarn on a cross-wound bobbin. A draw-off mechanism of yarn from the spinning unit is arranged between the spinning unit and the winding device and the drum storage device of yarn with a driven rotary drum and a compensating rotary arm is arranged between the yarn draw-off mechanism and the winding device, in which the driven rotary drum is coupled to a first drive consisting of an electric motor and the compensating rotary arm is coupled to a second drive consisting of an electric motor, both the motors being equipped with an encoder for the shaft position and/or rotation speed and allow precisely controlled bidirectional movement and stopping of the rotary drum or compensating rotary arm according to the instructions of the common control system and the immediate need for technological processes at the workstation. The output of a yarn quality sensor is connected to a common control system, whereby the sensor provides information that there is a yarn defect in the yarn reserve on the rotary drum, or if a long defective section is detected in the yarn wound on the cross-wound bobbin. This solution makes it possible to control the rotation of the compensating rotary arm by its own drive depending on the direction and speed of rotation of the rotary drum in such a manner that during continuous spinning a constant torque is exerted on the yarn to create the desired tension in the yarn for winding the yarn onto the cross-wound bobbin and when moving from the continuous spinning to the intermediate state, the speed and torque of the compensating rotary arm are controlled independently of the speed and direction of the drum rotation.

For process control, devices according to CZ PV 2014-399 and CZ PV 2012-479 use information from sensors such as a sensor of yarn quality, position a sensor of the position of the compensating arm or a sensor of the rotary drum motion, etc., evaluated by the control unit.

Furthermore, EP 1 460 015 discloses a device for maintaining a constant tension in the yarn being wound by a drum storage device of yarn arranged at a workstation of a textile machine, which comprises a sensor of the quantity of the yarn wound, wherein when the quantity of the wound yarn is exceeded, the control unit reduces the rotation speed of the drive of the yarn winding rotary drum. The information from the yarn quantity sensor on the drum storage device is only used to control the speed of the rotary drum.

In addition, EP 2 966 020 discloses a yarn accumulating device with an accumulating roller arranged at a workstation of a textile machine comprising an external yarn tension sensor, an external yarn quality sensor, a control unit and an accumulating roller with a rotating yarn guiding arm, whereby the accumulating roller, as well as the rotating yarn guiding arm, are driven independently from each other by their own drive which is regulated by the control unit on the basis of a signal from the yarn tension sensor, the yarn quality sensor and information about the position and speed of the accumulating roller and the rotating compensating arm of yarn. The information from the sensors and drives is used to control the speed of the rotating guiding arm and the accumulating roller.

The disadvantage of all these well-known devices is the fact that the information about the operation of the compensating member is only used to regulate operation of the compensating arm.

EP 2075359 B1 describes a device in which a yarn clearer (yarn quality sensor) evaluating the yarn quality during the process of spinning and winding passes information about the need to remove a defective yarn section or about the absence of a yarn break to the controller of the unit which, after evaluating the information, sends a command to device for maintaining yarn tension which regulates the excitation of a bobbin to suspend or delay the rotation of a flyer relative to the rotation of a drum, thereby regulating the yarn tension during a service operation or during spinning-in at the workstation. At the same time, the unit controller regulates the excitation of the bobbin according to the information about a currently wound diameter of a package on a bobbin or according to the time period from the start of the spinning-in process. On the basis of this information, the unit controller controls activities at other nodes of the spinning station, for example, a spinning unit, a drafting device or a service robot.

US306694 B2 discloses a device in which a thread brake and a vacuum yarn storage device perform the function of the compensator. The device does not use either an arm compensator or a rotary storage device with a drum and a flyer to sense the quantity from which the state value would be determined, which is used to control the other work nodes of a workstation of a textile machine.

For the sake of simplicity, the arm compensator of yarn or the drum storage device of yarn with a rotating compensating arm of yarn and a hooking element will be denoted hereinafter by the uniform and common term "compensating unit" and the compensating swing arm of the compensator or the rotating compensating arm with a hooking element by the uniform and common term "compensating member".

The object of the present invention is to reduce or at least to minimize the disadvantages of the background art, especially to improve the use of information about the operation of the compensating unit or of the compensating member.

### Principle of the invention

The object of the invention is achieved by a method for controlling working means of a workstation of a textile machine, especially of a yarn manufacturing textile machine, comprising a compensating unit with a compensating arm for compensating for a yarn loop, optionally with a rotary drum for accumulating yarn, whereby information from internal and external detection means of the compensating unit is used for the control activity of a control unit comprising a controller. The principle of the invention consists in that at least one quantity of the current state of the compensating member and/or optionally, of the rotary drum is sensed, and this value is used for controlling other work nodes of the workstation and/or of the machine. Thus, information from internal or external means of detecting the operation of the compensating unit is used, such as the information about the position, movement or speed of the compensating member of the swing or rotary arm and/or the optional rotary drum, or information about a yarn break on the winding device, etc., or a combination thereof, and/or information from the drive means of the compensating unit, such as the electric voltage, electric current or frequency. This information evaluated by the control unit of the machine is used to assess the state of ongoing technological processes of yarn production or service activities at other nodes of the workstation, such as a yarn draw-off device, a yarn winding device, a sliver feeding device and serve to control the above-mentioned devices or to control the operation of the service robot of the machine.

The advantage of this method of control is that the evaluation and use of information about the operation of the compensating unit during yarn formation or during service activities at the workstation not only allows to perform diagnostics and regulation of the compensating unit itself, but on the basis of this information it is possible to perform diagnostics with respect to the operation of other devices involved in the process of yarn formation and to control them, or, if necessary, to control attending operations and service activities of service robots at the workstation of the machine. Sensing the behavior of the compensating unit is used to detect an unexpected or, on the contrary, expected event at the spinning station, such as a sudden change in the position of the compensating member during a yarn break or during an unexpected change in the yarn tension, or a situation when the compensating member stops due to the presence of yarn in a certain space (detector of the presence of yarn or another object in the working zone of the compensating member of the unit) or, on the contrary, sensing the behavior of the compensating unit is used for detection of free passage of the compensating member through the entire range of its possible movement (detection of the absence of yarn or another object in the working zone of the compensating member), detection of the correct course of unwinding the yarn from the bobbin, or detection of unwanted yarn or an object in the path of the compensating member, or detection of malfunction of the vacuum or drum storage device of yarn, or detection of incorrect drawing-off speed of the draw-off mechanism, of the feeding device or spinning unit. Furthermore, sensing the behavior of the compensating unit is used as a starter of a working cycle after termination of the operator activity, or as a detector of the presence of the operator, etc. All these states or changes are sensed either during the spinning process, i.e. in the production phase, or during the interruption of the spinning process, i.e. in the non-production phase. The states or changes thus detected are then used to control other nodes of the spinning station independently of the main operation of the compensating unit, i.e. in order to compensate for a yarn loop and/or the yarn tension.

According to a preferred embodiment, at least one quantity selected from the group including speed of rotation, position, acceleration, stopping, direction of rotation, the number of revolutions is sensed, since these quantities can be sensed and reproduced well and accurately.

From the point of view of simplicity and utilization of the means at the workstation, it is advantageous if the current state value is sensed on the internal means of the compensating unit and it is not necessary to use other sensors for sensing the quantities which would increase the cost of the device, occupy space at the workstation of the machine and make the arrangement of the device more complex.

In this case, it is advantageous if the quantity of the current state sensed is at least one quantity from the group including the voltage and/or electric current on the drive motor of the compensating unit and/or at least one state value of the drive motor shaft of the compensating unit for the compensation of a yarn loop.

For better utilization of the means of the workstation, it is advantageous if the value of the current state quantity is compared to the predicted value of the quantity of the compensating member and/or of the rotary drum and the match rate between the sensed and the expected value of the current state of the quantity compensating member and/or of the rotary drum is evaluated, whereupon the determined match rate is introduced as at least one of the control parameters of at least one work node of the workstation and/or of the service device.

In order to better determine the operating state at the workstation, the value of the current state sensed quantity is compared to the predicted value of that quantity which corresponds to a particular operating state at the workstation, in particular the operating state during the yarn production and winding yarn or the operating state during unwinding yarn, whereby to each operating state thus determined is assigned a corresponding working procedure for controlling at least one work node of the workstation and/or of the service robot.

The principle of the device for performing the method for controlling means of a workstation of a yarn manufacturing textile machine, comprising a compensating unit of a yarn loop with a swing compensating member or a rotary compensating member and a rotary drum of an intermediate storage device of yarn for accumulating yarn, consists in that the control unit is via a bidirectional communication channel coupled to internal means or external means of detecting the current state the compensating unit, and the control unit is provided with a decision-making and driving controller of the work nodes of the workstation according to the state of the compensating unit. The controller of the work nodes of the control unit of the workstation includes various software procedures that are started depending on whether the workstation performs normal production activity or whether service activity is performed at the workstation. The operation may consist of, for example, removing yarn defects, replacing the full bobbin with an empty tube or resuming the spinning process after a yarn break.

In addition, the principle of the invention consists in the fact that the compensating member is associated with a sensing device sensing at least one state value selected from a group consisting of speed and direction of rotation, position, acceleration and speed of the compensating member.

From the point of view of utilization of variability and complexity, it is advantageous if the decision-making and driving controller of the workstation nodes according to the state of the compensation unit is formed by the software of the control unit.

### Description of the drawings

The invention is schematically represented in a drawing, where Fig. 1 shows an arrangement of a workstation of a yarn manufacturing textile machine with an arm compensator of a yarn loop, Fig. 2 shows an arrangement of the workstation of a yarn manufacturing textile machine with a drum intermediate storage device of yarn and a rotary compensating arm, Figs. 3 to 9 show schematic representation of situations when using output information of the compensating unit to control other devices of the workstation, Fig. 10 shows a flowchart of the device for performing the control method, Fig. 11 shows a diagram of a method for controlling other devices of the workstation of the spinning machine.

### Example of embodiment of the invention

The present invention will be described with reference to an exemplary embodiment of a yarn manufacturing textile machine, which comprises at least one row of identical workstations arranged next to each other, at which yarn 1 is produced from sliver 18 supplied by a feeding device 17 in the spinning unit 12, from which yarn 1 is withdrawn by means of a draw-off mechanism 2 and after that it is wound on a bobbin 4 by means of a winding device 3 of yarn 1. A traversing device 5 is located between the draw-off mechanism 2 and the winding device 3 of yarn 1 in the path of yarn 1. The traversing device 5 traverses the wound yarn 1 over the width of the bobbin 4. A compensating unit 9 for compensating for the loop of yarn 1 is arranged between the traversing device 5 of yarn 1 and the draw-off mechanism 2 of yarn 1.

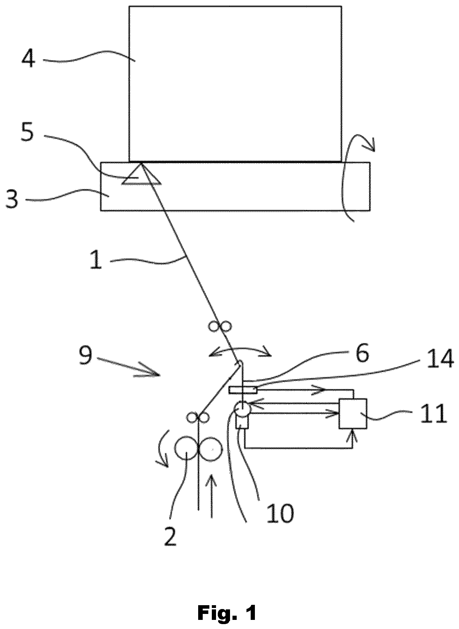

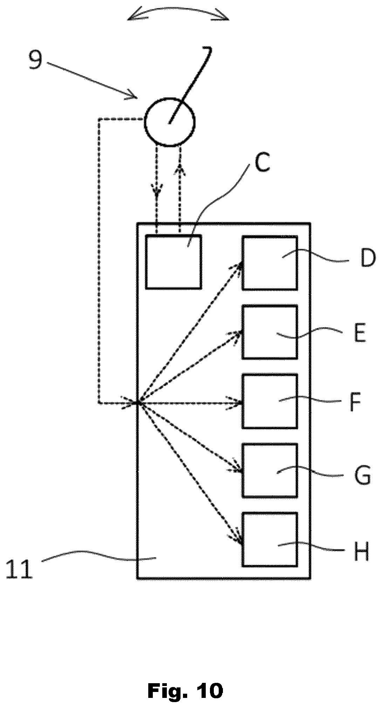

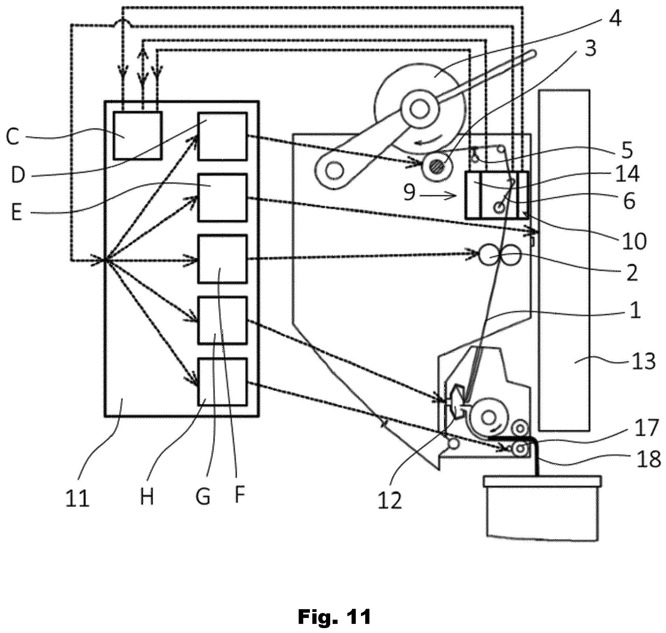

According to the exemplary arrangement of the workstation of Fig. 1, the compensating unit 9 of yarn 1 is formed by an arm compensator on which is arranged a swing compensating member 6 which compensates for the loop of yarn 1 which is formed during the traversing of the yarn 1 over the width of the cross-wound bobbin 4, especially conical. The compensating unit 9 is equipped with internal means 10, or external means 14 of detecting its operation which sense, for example, the position, direction and speed of movement or torque of the compensating member 6 and this information is sent to the control unit 11 of the workstation which is coupled via a bidirectional communication channel to the internal means 10 or the external means 14 of detecting the current state of the compensating unit 9 and which is further provided with decision-making and driving controllers C,D,E,F,G and H of the working nodes of the workstation. In the exemplary arrangement, decision-making and driving controller C shown in Figs. 10 and 11 serves to control the compensating unit 9, controller D controls the winding device 3, controller E controls the service robot 13 of the spinning stations, controller F controls the draw-off mechanism 2 of yarn 1, controller G controls the spinning unit 12 and controller H controls the feeding device 17 of sliver 18. The control unit 11 evaluates information about the state of the compensating unit 9 and, together with a machine control unit (not shown), performs the control activity in at least one of several different software procedures, depending on whether the workstation is in normal, i.e., operational, process, when the yarn 1 is spun and wound on the bobbin 4, or whether service and service operations are performed by the workstation's own means or by the service robot 13. The same information from the internal means 10 or external means 14 of detection may lead to different procedures and activities at the workstation of the machine depending on the operating mode of the workstation in which the information was passed to the control unit 11 of the workstation. Subsequently, the control unit 11 selects an appropriate procedure for the operations at the workstation.

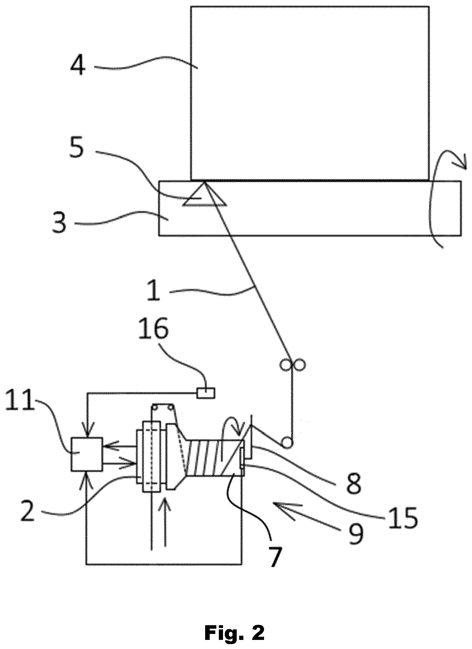

According to the exemplary arrangement of the workstation of Fig. 2, the compensating unit 9 of yarn 1 is formed by an intermediate storage device of yarn which comprises a rotary drum 7 for accumulating yarn 1 with a drive and a compensating member 8 with a drive performing compensation of a yarn 1 loop which is formed during the traversing of the yarn 1 over the width of the cross-wound bobbin 4, especially conical. The compensating unit 9 is equipped with internal means 15 or external means 16 of detecting its operation, which sense, e.g. the position, direction and speed of the movement, number of revolutions or the yarn reserve of the compensating member 8 or of the drum 7 and this information is passed to the control unit 11 of the workstation, which evaluates it and, together with an unillustrated control unit of the machine, performs the control activity at least in one of multiple different software procedures, depending on whether the workstation is in normal, i.e., operational mode, when the yarn 1 is spun and wound onto the bobbin 4, or whether or whether service and service operations are performed by the workstation's own means or by the service robot 13. The same information from the internal means 15 and from the external means 16 of detection may lead to different procedures at the workstation of the machine according to the operating mode of the workstation during which the information was sent to the control unit 11 of the workstation. Subsequently, the control unit 11 selects the appropriate procedure of operations at the workstation.

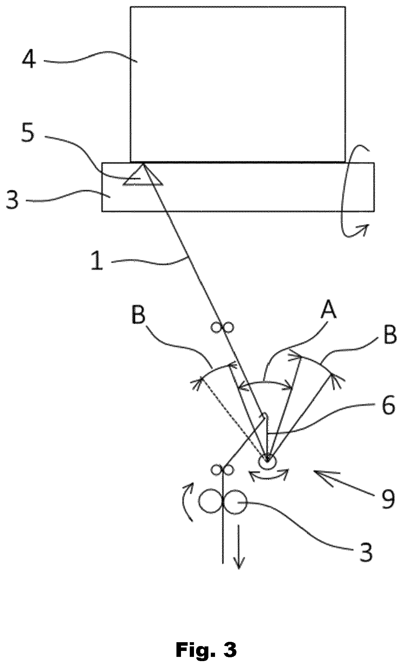

According to the exemplary embodiment of the method shown in Fig. 3 the information about the position of the compensating member 6 from the internal means 10 or from the external means 14 of detecting the compensating unit 9 is used during the service operations taking place at the workstation, when the yarn end 1 is unwound from the package of the bobbin 4, and, at the same time, the compensating member 6 maintains by its swinging movement within a predetermined swing range A the required tension in the yarn 1 being unwound. If the compensating member 6 is deflected outside the predetermined swing range A, e.g., to range B, the internal detection means 10 or external detection means 14 of the compensating unit 9 transmits through the bidirectional communication channel information to the control unit 11, which decides, according to the respective software procedure for performing service and service operations, on the further procedure of performing the activity at the spinning station. For example, it may decrease/increase the reverse drawing-off speed of the draw-off mechanism 2 or may decrease/increase the reverse unwinding speed of the bobbin 4. The compensating unit 9 in this case serves as a sensor of the tension in the yarn 1 during a service operation.

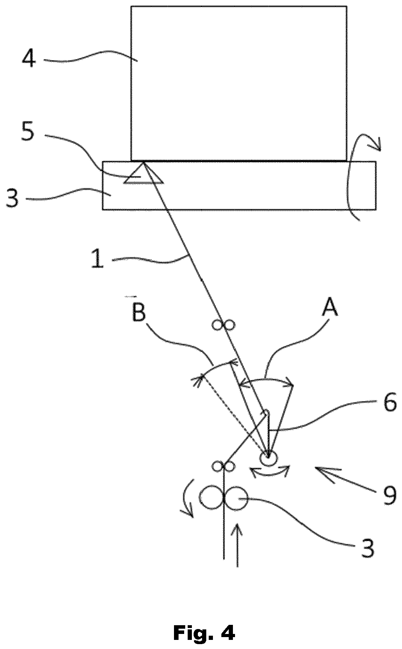

According to the exemplary embodiment of the method shown in Fig. 4, the information from the internal means 10 or external means 14 of detecting the compensating unit 9 is used during the formation and winding of the yarn 1, when the yarn 1 is withdrawn by the draw-off mechanism 2 from an unillustrated yarn 1 forming unit and is wound by the winding device 3 on the bobbin 4. During the process of winding yarn 1 on the bobbin 4, the tension in the yarn 1 being wound regularly changes due to the traversing of the yarn 1 over the width of the wound bobbin 4 and the compensating member 6 performs compensation of a yarn 1 loop to maintain the tension in the yarn 1 within the predetermined range, which is set - calibrated in each compensating unit 9 by setting the swing range A of deflection of the compensating member 6. The tension in the yarn 1 during winding the bobbin 4 may vary, for example, as a result of a change in the slip between the winding roller 3 and the package of the bobbin 4, which causes a change in the winding speed, in this case its decrease, whereas the drawing-off speed of the draw-off mechanism 2 does not change. Due to different drawing-off and winding speeds, the tension in the wound yarn 1 decreases, which manifests itself in the deflection of the compensating member 6 from the predetermined range of the tension in the yarn 1 and the swing compensating member moves to range B, which is recorded by the internal means 10 or the external means 14 of detection. The reduced tension in the yarn 1 can result in the formation of undesired loops on the yarn 1 and in the poor structure of the package on the bobbin 4. The control unit 11 of the workstation evaluates the deviation of the compensating member 6 from the predetermined yarn 1 tension range in the normal (operational) process as a difference, i.e. discrepancy of the drawing-off and winding speed and the drawing-off and winding speed of yarn 1 is adjusted in the preset software procedure. During winding yarn 1 on the bobbin 4, the compensating unit 9 of the yarn 1 provides information about the yarn 1 tension and on the mutual relation between the winding and drawing-off speeds of the yarn 1.

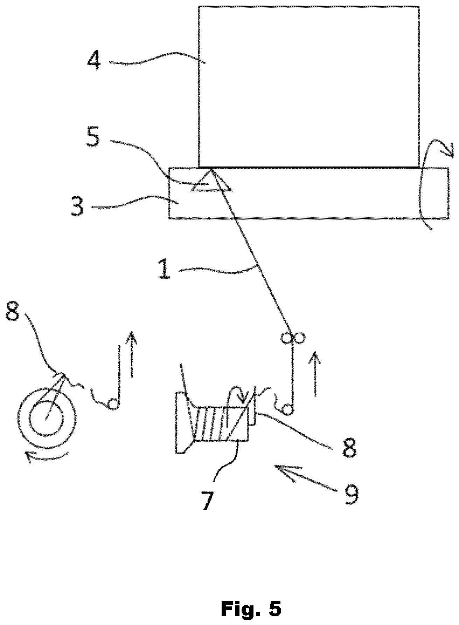

According to another embodiment of the method shown in Fig. 5, the information about the speed of rotation of the drum 7 and of the compensating member 8 of the intermediate storage device of yarn 1 during the formation and winding of the yarn 1 on the bobbin 4 is used to detect a yarn 1 break. The information about the speed of the compensating member 8 for the control unit 11, which suddenly increases, serves as information about a yarn 1 break between the draw-off mechanism 2 and the winding device 3, or the information about the incorrect unwinding of yarn 1 from the drum 7 of the intermediate storage device of yarn caused by the malfunction of the winding device 3.

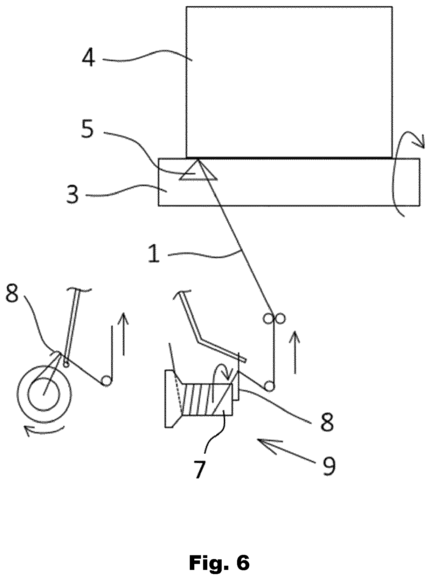

According to another embodiment of the method shown in Fig. 6, the information about the decrease in the actual revolutions of the compensating member 8 of the intermediate storage device of yarn 1 compared to the predetermined number of revolutions of the compensating member 8 caused by the presence of yarn 1 or of an unillustrated mechanical device in the travel path of the rotary compensating member 8 is used during production activity, which causes slowing or complete stopping of the compensating member 8. The information is evaluated by the control unit 11 and is used as a starting impulse for the subsequent automatic operations of the service of the workstation.

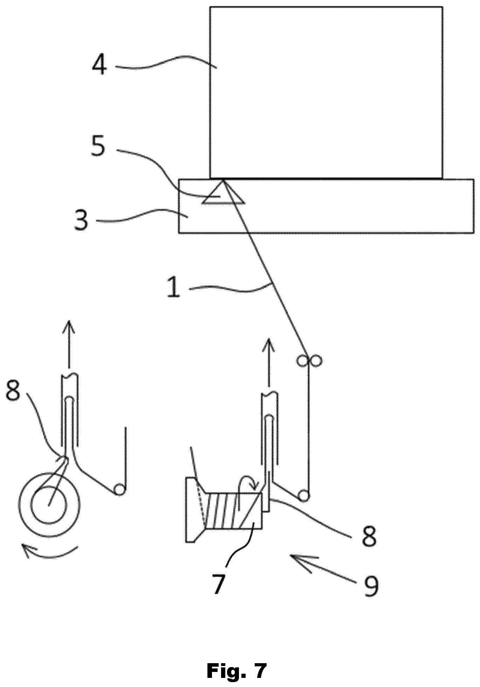

According to another embodiment of the method shown in Fig. 7, the control unit 11 uses the information about the current position of the compensating member 8 of the intermediate storage device of yarn 1 to stop the compensating member 8 in the required position, e.g. in the direction of the suction of yarn 1 from the drum 7 of the intermediate storage device of yarn 1 to an unillustrated trash removal pipeline during service operations at the workstation.

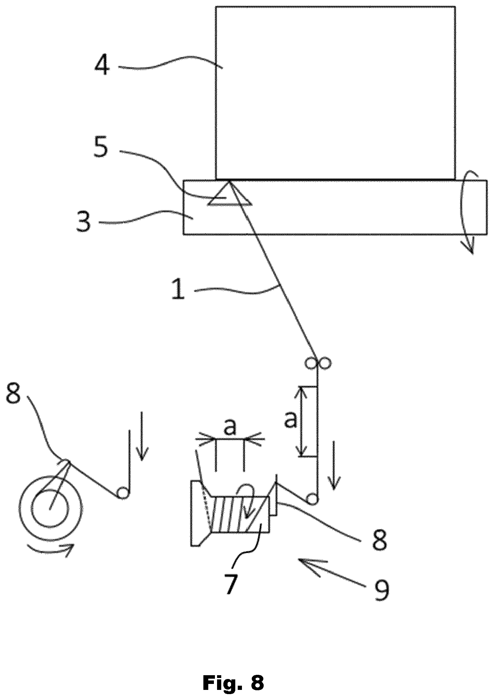

According to another embodiment of the method shown in Fig. 8, the information about the speed of rotation of the drive of the drum 7 and the drive of the compensating member 8 of the intermediate storage device of yarn 1 during the formation and winding of the yarn 1 on the bobbin 4, which is used in a known manner for determination of the yarn 1 reserve on the drum 7 of the intermediate storage device of yarn, is used to determine the length a of the wound yarn 1 on the rotary drum 7, onto which the yarn 1 is wound during the servicing operation before connecting the end of yarn 1 unwound from the package of the bobbin 4 to the beginning of the yarn 1 being supplied from the yarn forming unit during the resumption of spinning at the workstation. At this stage, the control unit 11 knows that the workstation is in an intermediate state and in a pre-set software procedure the predetermined length a of the yarn 1 is wound, corresponding to the determined number of revolutions of the rotary drum 7, which is crucial for carrying out the entire process of resuming spinning and winding the yarn 1 at the workstation. In this case, the compensating unit 9 serves to measure the required length a of the yarn 1 when connecting the yarn 1 during the service operation at the workstation.

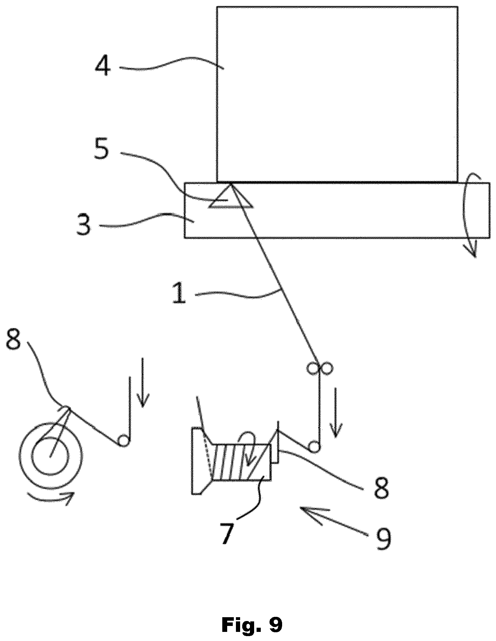

According to another embodiment of the method shown in Fig. 9, the information from the internal means 15 from the external means 16 of detecting the compensating unit 9 is used during the production activity in intermediate states, such as during a yarn 1 break or when removing a defect in the yarn 1, during which the yarn 1 is unwound from the package of the bobbin 4 and the passage of the yarn 1 in this direction is detected through sensing the specific position of the compensating member 8 of the compensating unit 9, whereby this position differs from the range of positions during production activity. The control unit 11 of the workstation knows that it is in non-working mode and selects a corresponding software procedure in which it evaluates the information about the position of the compensating member 8 and subsequently performs the control of the service means of the workstation or of the service robot.

### List of references

- 1: yarn
- 2: draw-off mechanism
- 3: winding device
- 4: bobbin
- 5: traversing device
- 6: compensating member (swing)
- 7: drum
- 8: compensating member (rotary)
- 9: compensating unit
- 10: internal means of detection (for arm compensator)
- 11: control unit
- 12: spinning unit
- 13: service robot
- 14: external means of detection (for arm compensator)
- 15: internal means of detection (for drum intermediate storage device)
- 16: external means of detection (for drum intermediate storage device)
- 17: feeding device
- 18: sliver
- A: predetermined swing range
- B: swing range
- C: compensating unit controller
- D: winding device controller
- E: service robot controller
- F: draw-off mechanism controller
- G: spinning unit controller
- H: feeding device controller
- a: length of yarn

## Claims

1. A method for controlling means of a workstation of a textile machine producing yarn (1) comprising a compensating unit (9) of a yarn (1) loop with a compensating member (6, 8) and, optionally, with a rotary drum (7), in which at least one quantity of the current state of the compensating member (6, 8) and/or of the optional rotary drum (7) is sensed, **characterized in that** from the sensed quantity is generated a state value which characterizes the current state of the compensating member (6, 8) and and/or of the optional rotary drum (7), whereupon the state value is introduced to the control unit of at least one other work node of the workstation and/or of the textile machine to control this other work node of the workstation and/or to control the textile machine.

2. The method according to claim 1, **characterized in that** at least one quantity from the group containing rotational speed, position, acceleration, stopping, direction of rotation, number of revolutions of the compensating member (6, 8) and/or of the rotary drum (7) is sensed as the sensed quantity (7).

3. The method according to claim 1 to 2, **characterized in that** for generating a state value, the sensed quantity is sensed by internal means (10) of the compensating unit (9).

4. The method according to claim 3, **characterized in that** for generating a state value, voltage and/or current on the drive motor of the compensating unit (9) is sensed and/or at least one state value of the shaft of the drive motor of the compensating unit (9) of a yarn (1) loop is sensed.

5. The method according to claim 1 to 4, **characterized in that** the state value is generated by comparing the sensed value of the current state of the compensating member (6,8) and/or of the rotary drum (7) to the predicted value of the sensed value of the compensating member (6,8) and/or of the rotary drum (7) and by evaluating the degree of matching between the actual and expected values of the sensed quantity, after which the state value is introduced as at least one of the control parameters of at least one work node of the workstation and/ or a service robot.

6. The method according to claim 1 to 5, **characterized in that** the state value is generated by comparing the sensed quantity of the current state of the compensating member (6, 8) and/or of the rotary drum (7) to the predicted value of that quantity in a particular operating state at the workstation, especially in the state of production and winding yarn (1) or in the operating state during the unwinding of the yarn (1) from the package on the bobbin (4), whereupon after a match of this comparison is found, a specific corresponding working procedure is started to control at least one work node of the workstation and/or the service robot.

7. A device for performing the method according to any of claims 1 to 6, which comprises a control unit (11) coupled to work nodes at a workstation of a textile machine, especially for the production of yarn (1), whereby the workstation further comprises a compensating unit (9) for the compensation of a yarn (1) loop, **characterized in that** the control unit (11) is coupled to internal means (10,15) or external means (14,16) of detecting the current state of the compensating unit (9) via a bidirectional communication channel, and the control unit (11) is provided with at least one decision-making and driving controller (D, E, F, G, H) of the work nodes of the workstation according to the state of the compensating unit (9).

8. The device according to claim 7, **characterized in that** the decision-making and driving controller of the work nodes of the workstation according to the state of the compensating unit (9) is formed by the software of the control unit (11).

9. A sensor of the state of a workstation of a textile machine, especially for the production of yarn, **characterized in that** it is formed by the compensating unit (9) for the yarn (1) loop compensation according to claim 7 or 8.
